# EUROPEAN PATENT APPLICATION

(11) **EP 4 206 050 A1**
(43) Date of publication of application: **05.07.2023**
(21) Application number: 21860531.9
(22) Date of filing: 27.08.2021
(51) Int. Cl.: B60W 30/06

(54) **VEHICLE PARKING METHOD, VEHICLE PARKING DEVICE, PARKING SYSTEM, AND VEHICLE**

(30) Priority: 31.08.2020 CN 202010898755
(71) Applicant: Great Wall Motor Company Limited, Hebei 071000 (CN)
(72) Inventor: WANG, Shichao, Baoding city, Hebei 071000 (CN); GAO, Tong, Baoding city, Hebei 071000 (CN); XU, Guangrui, Baoding city, Hebei 071000 (CN); LI, Lei, Baoding city, Hebei 071000 (CN); LI, Zhenning, Baoding city, Hebei 071000 (CN); ZHAO, Lixin, Baoding city, Hebei 071000 (CN); WEI, Shaochun, Baoding city, Hebei 071000 (CN); CHEN, Ning, Baoding city, Hebei 071000 (CN); LIU, Zhixue, Baoding city, Hebei 071000 (CN)
(74) Representative: dompatent von Kreisler Selting Werner - Partnerschaft von Patent- und Rechtsanwälten mbB
(86) International application number: PCT/CN2021/115111
(87) International publication number: WO 2022/042699

(57) **Abstract**

A parking method for a vehicle, a vehicle-mounted parking device, a parking system and a vehicle are provided. The parking method includes at least the following steps: step S1: controlling the vehicle to be disengaged from a parking gear; step S3: recognizing, by the vehicle, a parking gesture demonstrated by a user so as to start a gesture-based parking procedure; step S5: recognizing a parking-in or driving-out gesture demonstrated by the user by the vehicle to implement automatic parking. Different unique gestures are demonstrated by the user, and the vehicle makes a relevant response, so that parking may be performed according to the willingness of the user without recognizing a parking space line, sense of participation and interestingness of the user are improved, and a problem of the difficulty in parking-in or driving-out due to disorderly parking is solved simultaneously.

## Description

### CROSS-REFERENCE TO RELATED APPLICATIONS

The present application claims priority to Chinese patent application No. 202010898755.3 filed on August 31, 2020 with the Applicant of Great Wall Motor Company Limited filed, and entitled "parking method for vehicle, vehicle-mounted parking device, parking system, and vehicle".

### TECHNICAL FIELD

The present application relates to the technical field of vehicles, and more particularly relates to a parking method for a vehicle, a vehicle-mounted parking device, a parking system, and a vehicle.

### BACKGROUND

Due to the imperfection of basic construction facilities in China, some public places are not provided with a parking lot or the parking lot is not provided with parking space lines. If a user parks a vehicle at will, it is difficult for another user who parks vehicle subsequently to park his/her vehicle, and it is difficult for the user who parks the vehicle first to drive out. Currently, Xiaopeng vehicle with a vehicle model of G3 has realized an automatic recognition of a parking space through line control recognition and ground information perception, the aforementioned automatic recognition of the parking space is not suitable for a scenario where there is no parking space line.

### SUMMARY

The present application aims to at least solve one of the technical problems existing in the prior art.

To this end, one objective of the present application is to propose a parking method for a vehicle, which may solve the problem of the difficulty in parking-in or driving-out due to disorderly parking, which is further due to lack of parking space lines.

Another objective of the present application is to provide a vehicle-mounted parking device.

Another objective of the present application is to propose a parking system including the afore-mentioned parking device.

Another objective of the present application is to propose a vehicle for protecting the aforementioned parking device and applies the aforementioned parking method.

In order to achieve the aforementioned objectives, according to the first aspect of the present application, a parking method for a vehicle is provided, the parking method includes following steps of:
step S1: controlling the vehicle to be disengaged from a parking gear;
step S3: recognizing a parking gesture demonstrated by a user to activate a gesture-based parking procedure by the vehicle;
step S5: recognizing a parking-in or driving-out gesture demonstrated by the user to realize an automatic parking by the vehicle.

According to the parking method of the present application, different unique gestures are demonstrated by the user, and the vehicle makes a relevant response, so that parking may be performed according to the willingness of the user without recognizing a parking space line, sense of participation and interestingness of the user are improved, and a problem of the difficulty in parking-in or driving-out due to disorderly parking is solved simultaneously.

According to some embodiments of the present application, the parking method further includes: recognizing a gesture for starting an engine and thereby controlling the engine to be started, before a demonstrated driving-out gesture is identified.

According to some embodiments of the present application, before the step S3, the parking method further includes:
step S2: locking the user and only recognizing a subsequent gesture of the user by the vehicle after recognizing the parking gesture demonstrated by the user.

According to some embodiments of the present application, the parking method further includes: controlling a main control display screen to display a start state signal of the engine by the vehicle after the engine is started.

According to some embodiments of the present application, the vehicle is provided with a digital video recorder (DVR) and a head unit (HUT), the DVR is suitable for detecting a gesture of the user for starting the engine and generating a first gesture signal for starting the engine; the HUT is suitable for receiving the first gesture signal for starting the engine and sending a controller area network (CAN) signal to a Telematics Box (TBOX) after recognizing the first gesture signal for starting the engine; the TBOX sends a second gesture signal for starting the engine to a passive-entry-passive-start (PEPS) after receiving the CAN signal; the PEPS sends an instruction to start the engine after receiving the second gesture signal for starting the engine.

According to some embodiments of the present application, the step S5 includes:
step S51: determining a state of a HAP currently and sending a parking-in or driving-out command to the HAP selectively by the HUT according to the state of the HAP, after recognizing a parking-in or driving-out gesture signal.

According to some embodiments of the present application, the parking method further includes: do not sending the parking-in or driving-out command to the HAP by the HUT if the HAP is not in a standby state currently; sending the parking-in or driving-out command to the HAP by the HUT if the HAP is in the standby state currently.

According to some embodiments of the present application, the step S5 includes:
step S52: after receiving the parking-in or driving-out command by the HAP, the HAP sending a verification signal to the HUT by the HAP, and passing a verification between the HAP and the HUT successfully after a confirmation signal is returned by the HUT; sending the parking-in or driving-out command again by the HUT after the verification is successfully passed, and starting a self-inspection function of the HAP.

According to some embodiments of the present application, the step S5 includes:
a step S53: performing, when an abnormity is detected, a vehicle state detection and exiting a gesture-based parking procedure by the HAP, so that the vehicle is unable to perform a gesture-based parking; sending, by the HAP, a signal for starting parking-in or driving-out operation to a BCM of the vehicle when the abnormity is not detected, so that the BCM turns on double flashing light.

According to some embodiments of the present application, the step S5 includes:
step S54: detecting a parking-in or driving-out direction area by the HAP, sending, when a parking-in or driving-out condition is not met, a signal indicating that the parking-in or parting out condition is not met to the HUT by the HAP; when the condition is met, starting to perform a parking-in or driving-out by the HAP.

According to some embodiments of the present application, the step S5 includes:
step S55: entering a mode of suspending gesture-based parking procedure of the HAP when an obstacle appears in a parking-in or driving-out process, continuing to detect a state of the obstacle by the HAP in a certain period of time; continuing to perform an automatic parking-in or driving-out operation by the HAP when the obstacle disappears; exiting the gesture-based parking procedure by the HAP if the obstacle still exists within a certain period of time.

According to some embodiments of the present application, the step S5 includes: sending, when detecting that the user sends a gesture for suspending parking, the gesture for suspending parking to the HUT by the DVR, sending a signal to the HAP by the HUT after recognizing the gesture for suspending parking, so that the HAP enters the mode of suspending the gesture-based parking procedure; continuing to perform the parking-in or driving-out operation by the HAP if a parking-in or driving-out command of a user is received within a period of time; automatically exiting the gesture-based parking procedure by the HAP if the parking-in or driving-out command is not received within a fixed time.

According to some embodiments of the present application, the parking method includes: sending, by the HAP, a parking-in or driving-out completion signal to the HUT after the parking-in or driving-out operation is completed, controlling the central control display screen to display the parking-in or driving-out completion signal by the HUT, exiting the gesture-based parking procedure and sending, by the HAP, a request for shifting to a parking gear and pulling up a handbrake to an electrical parking brake (ESP), in order that the ESP shifts the vehicle to the parking gear and pulls up the hand brake.

According to another aspect of the present application, a vehicle-mounted parking device is provided. The vehicle-mounted parking device incudes: a DVR, a HUT, a TBOX, and a PEPS, wherein the DVR, the HUT, the TBOX and the PEPS are in communication connection with each other. The DVR is adapted to detect a gesture for starting an engine made by a user and generate a first gesture signal for starting the engine. The HUT is adapted to receive the first gesture signal for starting the engine and send a CAN signal to the TBOX after recognizing the first gesture signal for starting the engine. The TBOX is configured to send a second gesture signal for starting the engine to the PEPS after receiving the CAN signal. The PEPS is configured to send an instruction to start the engine after receiving the second gesture signal for starting the engine.

According to one embodiment of the present application, the vehicle-mounted parking device further includes a HAP. The HAP is in a communication connection with the HUT and is suitable for detecting a parking-in or driving-out direction area.

The parking system according to the present application includes: the vehicle-mounted parking device according to any one of the aforesaid embodiments, and a Bluetooth key being in communication connection with the aforementioned vehicle-mounted parking device.

The vehicle according to the present application includes: the vehicle-mounted parking device in the aforementioned embodiments. The vehicle-mounted parking device is configured to perform the parking method described in the aforementioned embodiments. Additional aspects and advantages of the present application will be partially provided in the following descriptions, some of the additional aspects and advantages of the present application will become apparent from the following descriptions, or can be understood from the practice of the present application.

### DESCRIPTION OF THE DRAWINGS

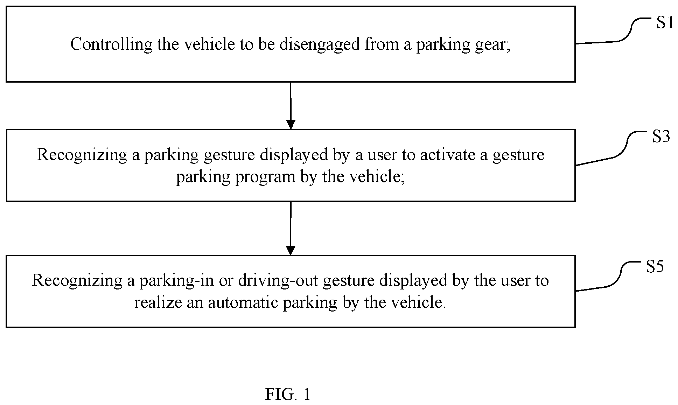

FIG. 1 illustrates a flow diagram of a parking method in accordance with the embodiments of the present application.

### DETAILED DESCRIPTION OF EMBODIMENTS

Herein, embodiments of the present application are described in detail, and examples of the embodiment are illustrated in the accompanying figures. An always unchanged reference number or similar reference numbers represent(s) identical or similar components or components having identical or similar functionalities. The embodiment described below with reference to the accompanying figures is for illustrative purpose, is intended to illustrate the present application, and thus should not be considered as being limitative to the present application.

A parking method for a vehicle according to one embodiment of the present application is described below with reference to FIG. 1. The parking method includes at least the following steps:
at a step S1, the vehicle is controlled to be disengaged from a parking gear;
at a step S3, a parking gesture demonstrated by a user is recognized by the vehicle, so that a gesture-based parking procedure is activated;
at a step S5, an automatic parking is realized by the vehicle after a parking-in or driving-out gesture demonstrated by the user is recognized.

Currently, Xiaopeng vehicle with a vehicle model of G3 has realized an automatic recognition of parking space through wire control and ground information perception. This vehicle automatically determines whether the surrounding parking space meets a parking condition according to radar and sensors. However, this vehicle is not applicable to a scenario where there is no parking line. Tesla has invented a remote call function in the software updated in 2019 on the basis of automatic parking. A user may call the vehicle from a parking space to a designated location through a mobile phone, this technique is developed based on practicability, but lacks a capability of allowing the user to freely demonstrate.

The present application completes parking by recognizing different gesture actions of users, such as a parking gesture, a parking-in gesture, a driving-out gesture. Where the parking gesture may enable the vehicle to start a gesture-based parking procedure and enter a state of preparing to recognize other gestures for parking. The parking-in gesture enables the vehicle to park in a designated parking space. The driving-out gesture enables the vehicle to drive out from the parking space.

When the vehicle is locked at a parking gear and the handbrake is pulled up, the vehicle is disengaged by recognizing the Bluetooth key carried by the user, and then start the gesture-based parking procedure by recognizing the parking gesture demonstrated by the user. After the gesture-based parking procedure is started, a gesture demonstrated by the user is recognized again. If the gesture is the parking-in gesture, the vehicle parks in the designated parking space after receiving a command. If the gesture is the driving-out gesture, the vehicle drives out from the parking space after receiving a command.

According to the parking method of the present application, the vehicle makes relevant responses according to different specific gestures demonstrated by the user. Parking may be performed according to the user's own will without recognition of a parking line, sense of participation and interestingness of the user are increased, and a problem of the difficulties in driving out and parking-in caused due to disordered parking has been solved.

According to one embodiment of the present application, the vehicle recognizes a gesture for starting an engine and control the engine to be started before the displayed parking gesture is recognized.

Since the engine needs to be started before the vehicle is driven out from the parking space, and the engine provides driving force for the vehicle, while the engine is generally started when the vehicle is parked in, so that it is unnecessary to consider whether the engine is started. Thus, it is necessary to start the engine with the gesture for starting the engine before driving out the vehicle from the parking space.

According to one embodiment of the present application, before the step S3, the parking method further includes:
at a step S2, the vehicle locks the user and only recognizes a subsequent gesture of the user after recognizing the parking gesture demonstrated by the user.

The user demonstrates the parking gesture. After the vehicle recognizes the parking gesture, the vehicle starts the gesture-based parking procedure and locks the user who sends a gesture command of gesture parking. In this condition, the vehicle will only receive other gesture commands of the recognized user, and ignores gesture commands of other people.

According to one embodiment of the present application, after the engine is started, a central control display screen for vehicle control displays an engine start status signal. The central control display screen displays relevant text prompts (e.g., the engine has been started).

According to one embodiment of the present application, the vehicle is equipped with a digital video recorder (Digital Video Recorder, DVR) and a head unit (Head Unit, HUT). The DVR is suitable for detecting the gesture for start the engine from the user and generating a first gesture signal for starting the engine. The HUT is suitable for receiving the first gesture signal for starting the engine and sending a controller area network (Controller Area Network, CAN) signal to a telematics box (Telematics Box, TBOX) after recognizing the first gesture signal for starting the engine. The TBOX will send a second gesture signal to a passive entry passive start (Passive Entry Passive Start, PEPS) after receiving the CAN signal. The PEPS will send a command to start the engine after receiving the second gesture signal for starting the engine.

In this condition, the user demonstrates the gesture for starting the engine. After the DVR camera records the gesture for starting the engine, the DVR camera generates the first gesture signal for starting the engine and sends the first gesture signal to the HUT. The HUT recognizes the first gesture signal for starting the engine as the command for starting the engine through an internal algorithm, and then sends the CAN signal to the TBOX. After receiving the CAN signal, the TBOX will send the second gesture for starting the engine to the PEPS. The PEPS will send the command for starting the engine after receiving the second gesture signal for starting the engine.

According to one embodiment of the present application, the step S5 includes:
at step S51: after recognizing a parking in or driving out gesture signal, the HUT determines a current status of HAP, and selectively sends a parking in or driving out command to the HAP according to the status of the HAP.
at step S52: after HAP receives the parking-in or driving-out command, HAP will send a verification signal to HUT. After HUT returns a confirmation signal, the verification between the HAP and the HUT is successfully passed. After the verification is successful, HUT sends the parking-in or driving-out command again, and HAP is started to perform a self-inspection function.

After the engine is started, the user makes the park-in or park-out gesture. After the DVR recognizes the park-in or park-out gesture, the DVR will send the information to HUT. HUT will recognize the parking-in or driving-out gesture command through an internal algorithm and determines the current status of the HAP. If the HAP meets the condition, HAP will send the verification signal to HUT. After HUT returns the confirmation signal, the verification between HAP and HUT is successfully passed. If the HAP does not meet the conditions, HAP does not make a response.

After the verification is successfully passed, HUT sends the parking-in or driving-out gesture command again, and HAP starts the self-inspection function (e.g., inspecting whether the DVR is operated normally, inspecting whether the radar is operated normally, etc.).

It is worth noting that, since the user's parking-in gesture and the user's driving-out gesture may be different, thus, the gesture in step S51 and the gesture in the step S52 need to be consistent, that is, both the gesture in the step S51 and the gesture in the step S52 must be the parking-in gesture or be the driving-out gesture. Certainly, a condition that the parking-in gesture and the driving-out gesture are the same gesture are also included.

According to one embodiment of the present application, if HAP is not in standby status currently, HUT will not send the parking-in or driving-out command to HAP. If the HAP is in the standby status currently, HUT will send the parking-in or driving-out command to HAP.

The specific conditions that need to be met by HAP are as follows: if HAP is not in the standby status currently, HUT will not send a parking-in or driving-out request to HAP. If HAP is in the standby status currently, HAP will send the parking-in or driving-out command to HAP, and HAP will send the verification signal to HUT after receiving the command. After HUT returns the confirmation signal, the verification between HAP and HUT is successfully passed.

According to one embodiment of the present application, the step S5 includes:

At a step S53: vehicle status detection is conducted. When an abnormal condition is detected, HAP exits the gesture-based parking procedure, so that the vehicle cannot park in or drive out according to gestures. When abnormality is not detected, the HAP sends a parking -in-or-driving-out start signal to a body control module (Body Control Module, BCM) of the vehicle, so that the BCM turns on double flashing light.

After confirming that HAP is normally operated, vehicle status detection is conducted, for example, whether the vehicle gear is the parking gear, whether the handbrake is pulled up, whether the four vehicle doors have been closed, etc. When the abnormality is detected, HAP exits the gesture-based parking procedure. In this condition, the vehicle will no longer recognize the parking-in or driving-out gesture. If it needs to continue to use the gesture-based parking procedure, the gesture-based parking procedure must be reactivated from the operation of displaying the parking gesture in the step S3. When abnormality is not detected, HAP sends the command for starting parking-in or driving-out to the BCM of the vehicle. The BCM turns on the double flashing light, and the double flashing light function continues to be turned on during the parking process of the vehicle, so that a signal prompt of parking is sent to a user outside the vehicle.

According to one embodiment of the present application, the step S5 includes:
At a step S54, a parking-in or driving-out direction area is detected by HAP. When the condition is not met, HAP sends a signal indicating that a condition of parking-in or driving out the parking space is not met to HUT. When the condition is met, HAP starts to enable the vehicle to park-in or drive-out.

After turning on the double flash and preparing for parking-in or driving-out the parking space, HAP will detect the parking-in or driving-out direction area, and determine whether there is an obstacle in the parking-in or driving-out direction area and whether the space area for parking-in or driving-out of the parking space meets the condition for parking-in or driving out of the parking space. For example, when the vehicle drives out of the parking space, whether there is an obstacle in the front area of the vehicle and whether the space area in the front of the vehicle meets a driving-out requirement are detected. If there is no obstacle in the front of the vehicle and the space area in front of the vehicle meets the driving-out requirement, the vehicle may be driven out from the parking space. When the vehicle is parked in, whether there is an obstacle in the rear area of the vehicle and whether the space area in the rear of the vehicle meets the parking requirement are detected. If there is no obstacle in the rear area of the vehicle and the space area in the rear of the vehicle meets the parking-in requirement, the vehicle may be parked in.

According to one embodiment of the present application, the step S5 includes:
at a step S55: when there is an obstacle in a parking-in or driving-out process, HAP will enter a mode of suspending gesture-based parking procedure. HAP will continue to detect the status of the obstacle within a certain time. If the obstacle disappears, HAP will continue to perform the parking-in or driving-out operation automatically. If the obstacle is still existed within a certain time, HAP will exit the gesture-based parking procedure.

The vehicle status and HAP function are continuously detected during parking-in or driving-out process. If one of the problems including central control unit failure, associated system failure, personnel intervention, trunk open, vehicle door open, the HAP will suspend the gesture-based parking procedure and send the corresponding signal to HUT at the same time. HUT will display a text prompt on the central control screen. If influencing factors still exist within a certain period of time, HAP will exit the gesture-based parking procedure automatically.

In one embodiment of the present application, when the obstacle appears during the process of parking-in or driving-out of the parking area, HAP will enter the mode of suspending the gesture-based parking procedure. HAP will continue to detect the status of the obstacle within a certain period of time. If the obstacle disappears, HAP will continue to perform the parking-in or driving-out operation. If the obstacle still exists within a certain period of time, HAP will exit the gesture-based parking procedure. If it needs to continue to use the gesture-based parking procedure, the gesture-based parking procedure must be restarted from the operation of displaying the parking gesture in the step S3.

According to one embodiment of the present application, the step S5 includes: if detecting that the user sends a gesture for suspending parking during a parking-in or driving-out process, the DVR will send the gesture for suspending parking to HUT. HUT will send a signal to HAP after the gesture for suspending parking is recognized. In this condition, HAP enters the mode of suspending gesture-based parking procedure. If the user's parking-in or driving-out command is received again within a certain period of time, HAP will continue to perform the parking-in or driving-out operation. If the parking-in or driving-out command is not received within a fixed time, HAP will exit the gesture-based parking procedure automatically.

In the parking-in or driving-out process, if the user sends a gesture for suspending parking, the DVR will send the recorded gesture command to HUT. HUT will send the gesture command to HAP after recognizing the gesture for suspending parking. At this time, HAP will enter the mode of suspending the gesture-based parking procedure mode. If the parking-in or driving-out gesture command from the user is received again within a period of time, HAP will continue to perform parking-in or driving-out operation. If the request for continuing to park-in or drive-out cannot be received within a certain period of time, HAP exits the gesture-based parking procedure automatically. If it needs to continue to use the gesture-based parking procedure after exiting the gesture-based parking procedure, the gesture-based parking procedure must be restarted from the operation of displaying the parking gesture in the step S3.

According to one embodiment of the present application, after the operation of parking-in or driving-out is completed, HAP sends a parking-in or driving-out completion signal to HUT, HUT controls the central control display screen to display the status signal indicating that the parking-in or driving-out operation is completed. HAP exits the gesture-based parking procedure and sends a request for shifting to a parking gear and pulling up a handbrake to an electrical parking brake (Electrical Parking Brake, ESP), so that ESP shifts the gear to the parking gear and pulls up the handbrake.

After the completion of parking-in or driving-out operation, HAP sends the parking-in or driving-out completion signal to HUT. HUT will display a text prompt (e.g., driving-out operation has been accomplished, please take over the vehicle, the parking of the vehicle has been accomplished, etc.) on the central control display screen. At the same time, HAP exits the gesture-based parking procedure and sends the request of shifting to the parking gear and pull up the handbrake to ESP, so that the ESP shifts the gear to the parking gear and pulls up the handbrake.

According to one embodiment of the present application, the detailed process of the parking method is described as follows:
A user carries a Bluetooth key and approaches the vehicle, the vehicle will automatically unlock the vehicle after detecting the Bluetooth key. Then, HUT and DVR will be started in the background. At this time, DVR will enter the working mode to take photos, and DVR may recognize various gestures of the user. At this time, the user will stand in front of the vehicle and display a parking gesture to start the gesture-based parking procedure. DVR will send the captured information to HUT. After the information is received, HUT will send a command for locking personnel information to DVR. Then, the user will be locked by the DVR.

The user demonstrates the gesture for starting the engine in front of the vehicle. The DVR generates a first gesture signal for starting the engine and sends the first gesture signal to HUT. HUT recognizes the gesture command through the internal algorithm, and then sends a CAN signal to TBOX. After receiving the CAN signal, TBOX transmits the second gesture signal of the engine to PEPS. PEPS sends the second gesture signal of the engine so as to start the engine.

After the engine is started, HUT receives an engine start status signal and provides a text prompt on the central control display screen. After receiving the engine start information, the user demonstrates the parking-in or driving-out gesture. After the DVR recognizes the parking-in or driving-out gesture command, DVR will send the information to HUT. HUT determines a current status of HAP after recognizing the gesture information through the internal algorithm.

If HAP is in a standby status currently, the parking command is sent to HAP. After receiving the command, HAP will send a verification signal to HUT. After HUT returns the confirmation signal, the verification between HAP and HUT is successfully passed.

After the verification is successfully passed, HUT will send the previous driving-out or parking-in command to HAP again. At the same time, HAP will start a self-inspection function. When malfunction of HAP is not detected after the self-inspection function is performed, vehicle status detection is performed.

When abnormality is not detected, HAP sends a parking-in or driving-out start signal to BCM. BCM continuously turns on the double flash for prompting during parking process. Then, HAP will detect driving out or parking-in direction area. When the condition is not met, HAP sends the signal indicating that the parking condition is not met to HUT, and HUT gives a relevant text prompt. When the condition is met, HAP starts to perform parking-in or driving-out operation.

After the driving-out or parking-in operation is completed, HAP sends the driving-out or parking-in completion signal to HUT, and the text prompt is provided through the central control display screen. HAP exits the gesture-based parking procedure and sends the request for shifting to the parking gear and pulling up the handbrake to ESP, so that ESP shifts the gear to the parking gear and pulls up the handbrake.

In some embodiments of the present application, in order to ensure the safety of usage of the gesture-based parking procedure of the user, the gesture-based parking procedure is provided in an automatic parking menu of the vehicle control center. Before using the parking method of the present application, a function switch button provided in the automatic parking menu needs be enabled, and a condition that the vehicle is shifted to the parking gear and the EPB is pulled up must be met at this time.

A vehicle according to one embodiment of the present application includes the aforementioned parking method.

In the description of the present application, the descriptions of the reference terms such as "one embodiment", "some embodiments", "example", "specific example" or "some examples" and the like means that the specific technical features, structures, materials or characteristics which are described with reference to the embodiments or the examples are included in at least one embodiment or example of the present application. In the description of the present application, a schematic expressions of the terms mentioned above don't necessarily aim at the same embodiment or example. Furthermore, the specific technical features, structures, materials, or characteristics described above may be combined in any suitable manner in any of one or a plurality of embodiments or examples. In addition, under the condition of without conflicting with each other, different embodiments or examples described in the description and the features in the different embodiments or examples may be integrated and combined by the person of ordinary skill in the art.

In the description of the present application, the descriptions of the reference terms such as "one embodiment", "some embodiments", "exemplary embodiments", "example", "specific example" or "some examples" and the like means that the specific technical features, structures, materials or characteristics which are described with reference to the embodiments or the examples are included in at least one embodiment or example of the present application. In the description of the present application, a schematic expressions of the terms mentioned above don't necessarily aim at the same embodiment or example. Furthermore, the specific technical features, structures, materials, or characteristics described above may be combined in any suitable manner in any of one or a plurality of embodiments or examples.

Although the embodiments of the present application have been illustrated and described, the person of ordinary skill in the art may understand that these embodiments can still be changed, revised, replaced and modified without departing from the principle and the purpose of the present application. The scope of the present application is limited by the claims and their equivalents.

## Claims

1. A parking method for a vehicle, **characterized in that**, the method comprises at least following steps of:
step S1: controlling the vehicle to be disengaged from a parking gear;
step S3: recognizing a parking gesture demonstrated by a user to activate a gesture-based parking procedure by the vehicle;
step S5: recognizing a parking-in or driving-out gesture demonstrated by the user to realize an automatic parking by the vehicle.

2. The parking method for the vehicle according to claim 1, further comprising:
recognizing a gesture for starting an engine and thereby controlling the engine to be started, before a demonstrated driving-out gesture is identified.

3. The parking method for the vehicle according to claim 1 or 2, wherein before the step S3, the method further comprises:
step S2: locking the user and only recognizing a subsequent gesture of the user by the vehicle after recognizing the parking gesture demonstrated by the user.

4. The parking method for the vehicle according to claim 2 or claim 3, further comprising: controlling a main control display screen to display a start state signal of the engine by the vehicle after the engine is started.

5. The parking method for the vehicle according to any one of claims 2-4, wherein the vehicle is provided with a digital video recorder (DVR) and a head unit (HUT), the DVR is suitable for detecting a gesture of the user for starting the engine and generating a first gesture signal for starting the engine; the HUT is suitable for receiving the first gesture signal for starting the engine and sending a controller area network (CAN) signal to a Telematics Box (TBOX) after recognizing the first gesture signal for starting the engine; the TBOX sends a second gesture signal for starting the engine to a passive-entry-passive-start (PEPS) after receiving the CAN signal; the PEPS sends an instruction to start the engine after receiving the second gesture signal for starting the engine.

6. The parking method for the vehicle according to claim 5, wherein the step S5 comprises:
step S51: determining a state of a HAP currently and sending a parking-in or driving-out command to the HAP selectively by the HUT according to the state of the HAP, after recognizing a parking-in or driving-out gesture signal.

7. The parking method for the vehicle according to claim 6, further comprising: do not sending the parking-in or driving-out command to the HAP by the HUT if the HAP is not in a standby state currently; sending the parking-in or driving-out command to the HAP by the HUT if the HAP is in the standby state currently.

8. The parking method for the vehicle according to any one of claims 5-7, wherein the step S5 comprises:
step S52: after receiving the parking-in or driving-out command by the HAP, the HAP sending a verification signal to the HUT by the HAP, and passing a verification between the HAP and the HUT successfully after a confirmation signal is returned by the HUT; sending the parking-in or driving-out command again by the HUT after the verification is successfully passed, and starting a self-inspection function of the HAP.

9. The parking method for the vehicle according to claim 8, wherein the step S5 comprises:
a step S53: performing, when an abnormity is detected, a vehicle state detection and exiting a gesture-based parking procedure by the HAP, so that the vehicle is unable to perform a gesture-based parking; sending, by the HAP, a signal for starting parking-in or driving-out operation to a BCM of the vehicle when the abnormity is not detected, so that the BCM turns on double flashing light.

10. The parking method for the vehicle according to claim 9, wherein the step S5 comprises:
step S54: detecting a parking-in or driving-out direction area by the HAP, sending, when a parking-in or driving-out condition is not met, a signal indicating that the parking-in or parting out condition is not met to the HUT by the HAP; starting to perform a parking-in or driving-out by the HAP when the condition is met.

11. The parking method for the vehicle according to claim 10, wherein the step S5 comprises:
step S55: entering a mode of suspending gesture-based parking procedure of the HAP when an obstacle appears in a parking-in or driving-out process, continuing to detect a state of the obstacle by the HAP in a certain period of time; continuing to perform an automatic parking-in or driving-out operation by the HAP when the obstacle disappears; exiting the gesture-based parking procedure by the HAP if the obstacle still exists within a certain period of time.

12. The parking method for the vehicle according to any one of claims 6-11, wherein the step S5 comprises: sending, when detecting that the user sends a gesture for suspending parking, the gesture for suspending parking to the HUT by the DVR, sending a signal to the HAP by the HUT after recognizing the gesture for suspending parking, so that the HAP enters the mode of suspending the gesture-based parking procedure; continuing to perform the parking-in or driving-out operation by the HAP if a parking-in or driving-out command of a user is received within a period of time; automatically exiting the gesture-based parking procedure by the HAP if the parking-in or driving-out command is not received within a fixed time.

13. The parking method for the vehicle according to any one of claims 6-12, comprising: sending, by the HAP, a parking-in or driving-out completion signal to the HUT after the parking-in or driving-out operation is completed, controlling the central control display screen to display the parking-in or driving-out completion signal by the HUT, exiting the gesture-based parking procedure and sending, by the HAP, a request for shifting to a parking gear and pulling up a handbrake to an electrical parking brake (ESP), in order that the ESP shifts the vehicle to the parking gear and pulls up the hand brake.

14. A vehicle-mounted parking device, **characterized in that**, the vehicle-mounted parking device comprises: a DVR, a HUT, a TBOX, and a PEPS, wherein the DVR, the HUT, the TBOX and the PEPS are in communication connection with each other;
the DVR is adapted to detect a gesture for starting an engine made by a user and generate a first gesture signal for starting the engine; the HUT is adapted to receive the first gesture signal for starting the engine and send a CAN signal to the TBOX after recognizing the first gesture signal for starting the engine, the TBOX is configured to send a second gesture signal for starting the engine to the PEPS after receiving the CAN signal, and the PEPS is configured to send an instruction to start the engine after receiving the second gesture signal for starting the engine.

15. The vehicle-mounted parking device according to claim 14, further comprising a HAP which is in a communication connection with the HUT and is suitable for detecting a parking-in or driving-out direction area.

16. A parking system, comprising the vehicle-mounted parking device according to any one of claims 14-15, and a Bluetooth key being in communication connection with the vehicle-mounted parking device.

17. A vehicle, comprising the vehicle-mounted parking device according to any one of claims 14-15, wherein the vehicle-mounted parking device is configured to perform the parking method for the vehicle according to claims 1-13.
